# EUROPEAN PATENT APPLICATION

(11) **EP 0 808 769 A2**
(43) Date of publication of application: **26.11.1997**
(21) Application number: 97303441.6
(22) Date of filing: 20.05.1997
(51) Int. Cl.: B64D 13/02

(54) **Oxygen enrichment in aircraft cabin atmospheres**

(30) Priority: 24.05.1996 GB 9610889
(71) Applicant: Finch Limited, Nassau (BS)
(72) Inventor: James, Philip B., Flocklones, Nr Longforgan (GB)
(74) Representative: Bankes, Stephen Charles Digby

(57) **Abstract**

A cabin pressurizing system for an aircraft includes one or more oxygen concentrators (20) to raise the partial pressure of oxygen in the cabin atmosphere. The oxygen concentrator is preferably positioned in a conduit (12, 14, 22) conveying pressurized air from an engine (10) of the aircraft to the cabin. By raising the percentage of oxygen in the cabin atmosphere, typically to a range of 25 to 35 volume %, the overall cabin pressure can be kept below normal atmospheric pressure, thus reducing stresses on the aircraft fuselage.

## Description

This invention relates to a system for adjusting the oxygen concentration in the cabin of an aircraft. In order to achieve an adequate range and conserve fuel, most passenger aircraft fly at altitudes in excess of 4,500 m and generally at altitudes from 7,500 to 11,000 m or more. Concorde can cruise at heights in excess of 18,000 m.

Aircraft flying at heights in excess of 3,000 m generally have to be pressurised to compensate for the reduced atmospheric pressure at such altitudes. Without such pressurisation, passengers and crew would be liable to suffer from hypoxia, since at an altitude of 3,000 m the ambient pressure is some 25% less than at ground level. Such pressurisation results in increased stresses on the aircraft fuselage in view of the pressure differential between the inside and the outside of the aircraft. Accordingly, the pressure used within the cabin is a compromise between the degree of human oxygen deficiency created by lower partial pressures of oxygen and the need to strengthen the aircraft fuselage.

The following table shows the ambient pressures at ground level and at higher altitudes up to 64,000 feet (19,507 m). It can be seen from this that even at altitudes well below the maximum cruising height of a non-pressurised aircraft, the oxygen partial pressure is substantially less than that prevailing at sea level, so that even at quite modest altitudes a passenger aircraft needs to be pressurised if passengers and crew are not to suffer the effects of hypoxia.

| Height above sea level | | Ambient Pressure | |
|---|---|---|---|
| Feet | Metres | p.s.i. | kPa |
| 0 | 0 | 14.7 | 101.4 |
| 4750 | 1448 | 12.185 | 84.0 |
| 8000 | 2438 | 10.83 | 76.7 |
| 10000 | 3048 | 10.44 | 72.0 |
| 12000 | 3658 | 9.28 | 64.0 |
| 15000 | 4572 | 8.32 | 57.4 |
| 17500 | 5334 | 7.35 | 50.7 |
| 25000 | 7620 | 5.6 | 38.6 |
| 36000 | 10973 | 3.288 | 22.7 |
| 40000 | 12192 | 2.707 | 18.7 |
| 44000 | 13411 | 2.32 | 16.0 |
| 60000 | 18288 | 1.064 | 7.3 |
| 64000 | 19507 | 0.812 | 5.6 |

Such pressurisation requires the aircraft fuselage to act as a hyperbaric chamber, with sufficient strength to contain the pressure and avoid fatigue failure over many thousands of pressurisation and depressurisation cycles. Cabin pressurisation is produced by diverting compressed air from the engines, thus consuming some of the engine power. Although the cabins of most passenger aircraft are pressurised, the pressure used is less than sea level atmospheric pressure since such a pressure would require the fuselage to be considerably stronger than current designs. The weight penalty introduced would greatly reduce the range of aircraft and other critical parameters such as the rate of climb. The cabin pressure used at a given flight altitude is therefore a compromise between the degree of hypoxia which the passengers and crew can tolerate and the strength, and consequently the weight, of the passenger compartment.

A cabin pressure equivalent to an altitude of 2,500m is about 76 kPa, compared to 101.4 kPa prevailing at sea level. The reduced oxygen partial pressure tends to impair the judgment and performance of the flight crew, doubling reaction times of the initial response to complex choice-reaction tests when compared to performance at ground level. The effect increases with the complexity of the task. Significantly lower pressures than this will not sustain consciousness.

Simulator training is usually undertaken at normal atmospheric pressure, and cannot therefore reveal deterioration in performance caused by hypoxia. Flight crew are also thought to be at risk of long-term health effects because of the frequency of their exposure to such reduced pressures.

Since oxygen transport via the lungs is known to be reduced by age, such health risks inevitably increase as senior flight crew approach retirement age.

Decisions on cabin pressures assume that passengers are healthy. Greater numbers of older passengers with known health problems are however now flying on long-haul aircraft. These include passengers with pulmonary disease, who are at special risk because of their impaired oxygen uptake. Hypoxia may also precipitate heart attacks and strokes during flight. Clots may form in the deep veins of the legs because of the combination of hypoxia and immobility during the journey, and subsequent exercise after landing may then cause pulmonary embolism which can be fatal.

As an airframe ages, the differential pressure which may be used for a particular aircraft may be reduced because of the risk of failure and explosive decompression which can result in acute hypoxia or decompression sickness and, in more serious instances, ejection of passengers or crew from the cabin or the total loss of an aircraft.

Hitherto, aircraft have only used compressed air to pressurize the cabin and therefore the oxygen percentage has been the same as at ground level, namely 20.9 vol.%. Reducing the cabin pressure below that prevailing at sea level accordingly reduces the oxygen partial pressure, giving rise to the problems discussed above.

There is therefore a need for a system for supplying oxygen to the cabin of an aircraft which enables the overall cabin pressure to be reduced without adversely affecting the atmospheric conditions for passengers or crew in the cabin, and which imposes less stress on the airframe than conventional systems.

According to the present invention the cabin pressurising system of an aircraft includes one or more oxygen concentrators to raise the partial pressure of oxygen in the cabin atmosphere, preferably to a level close to that prevailing in the ambient atmosphere at ground level. In the system of the present invention, the air supply from the engines normally used to pressurise the cabin can be wholly or partly diverted through the oxygen concentrator. A variable control system is preferably used so that the oxygen partial pressure can be adjusted according to the altitude of the aircraft and the required total cabin pressure.

Any suitable type of oxygen concentrator may be used, for example a polymer membrane concentrator or a pressure swing absorption concentrator. Either of these devices can be produce oxygen or oxygen-enriched air from compressed air, which can either be added to the air supply to the cabin or used directly to pressurise the cabin. In this way, the oxygen content of the cabin atmosphere may be raised from the 20.9% prevailing in the ambient atmosphere, and used in conventional aircraft, to a level preferably in a range from 25-35%.

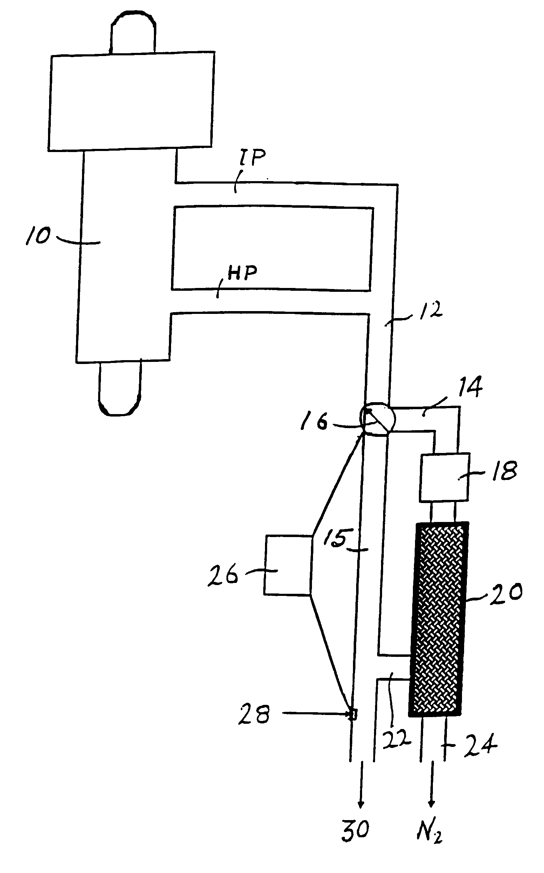

Further objects and advantages of the invention will become apparent from the following detailed description when read in conjunction with the accompanying drawing which illustrates schematically how air from the compressors of a jet engine may be subjected to oxygen concentration prior to being fed to an aircraft cabin.

Referring to the drawing, an aircraft jet engine 10 has a first air bleed HP from its high pressure compressor and a second bleed IP from its intermediate compressor. These two bleeds feed into a common conduit 12 leading to an automatic barometric pressure valve 16 which divides the compressed air supply from the conduit 12 between a conduit 15 leading directly to the aircraft cabin and a branch conduit 14 which leads through a further compressor 18 to a polymer membrane oxygen concentrator 20.

Nitrogen extracted from the air by the oxygen concentrator is expelled through an outlet 24, and may be used for ancillary purposes such as providing the fuel tanks with an inert atmosphere.

Oxygen enriched air, or just oxygen, leaves the concentrator 20 through a conduit 22 and rejoins the main conduit 15 supplying air to the cabin, thus increasing its oxygen content as required. Downstream of the point at which the conduit 22 joins conduit 15 is a sensor 28 which detects the oxygen partial pressure in the air supply to the cabin. A control unit 26, in response to signals from the sensor, actuates the valve 16 to divert a greater or smaller proportion of the air flow from conduit 12 through the oxygen concentrator 20 in order to maintain the required oxygen partial pressure.

Using the system of the invention at a flight altitude of for example 11,000 m, a cabin pressure of for example 72 kPa might be used. This corresponds to a flight altitude of about 3,000 m and with a conventional pressurising system would give an inadequate oxygen partial pressure. If however the oxygen content of the air supplied to the cabin is increased to 30%, this will given an oxygen partial pressure of about 20 kPa, which is approximately that of the ambient atmosphere at sea level.

Because the gas density in the cabin is lower than at sea level, the work of breathing is reduced, the expulsion of carbon dioxide is enhanced and respiration is more efficient. In this way both the safety and comfort of passengers and crew can be improved. Cabin altitudes up to 4,500 m can be used with greater levels of oxygenation and without the risk of decompression sickness. If the oxygen concentrator system were to fail at altitude there would be ample time for the aircraft to descend and reduce the cabin altitude. In the event of loss of pressure at altitude the increased oxygenation of passengers and crew will reduce the level of hypoxia and again allow the pilot more time to reduce altitude.

During the initial climb after take-off, and when the aircraft is in the final stages of descent, less oxygen need be added to the air supply and the valve 16 can allow more air to bypass the oxygen concentrator. When the aircraft is at an altitude below 300 m, the cabin atmosphere will, in accordance with current practice, be changed to air at a pressure just above the external pressure.

At altitude, the nitrogen enhanced gas from the outlet 24 can be piped to the fuel tanks, instead of air, to replace the volume vacated by the removal of fuel. This affords a major reduction in the partial pressure of oxygen in the fuel tanks, thus greatly reducing the fire risk. The fire risk and rate of combustion with an increased oxygen content in the aircraft cabin at altitude, which might have been thought to increase substantially in relation to those prevailing at sea level, will in fact be only marginally increased.

An aircraft using a maximum differential pressure of 55.64 kPa using current technology requires a test pressure of 83.46 kPa. If an equivalent aircraft used a cabin pressure corresponding to 4,600 m (57 kPa) at 13,400 m (16 kPa), the differential pressure would be 41 kPa requiring a test pressure of 61.5 kPa. This is a saving of nearly 22 kPa on the test pressure, affording a large weight reduction in the hull. To this could be added the reduced weight of the cabin atmosphere itself, yielding a still greater advantage in fuel consumption.

The system of the invention may also be used in non-pressurised aircraft such as the Short 360, simply to supplement the oxygen supply to the cabin. This could enable the maximum altitude of the aircraft to be increased from 3,000 to 4,500 m.

## Claims

1. A cabin pressurizing system for an aircraft which comprises at least one oxygen concentrator (20) arranged to raise the partial pressure of oxygen in the cabin atmosphere.

2. A pressurizing system as claimed in claim 1 comprising a conduit (12, 14, 15, 22) for feeding compressed air from an engine (10) of said aircraft to said cabin, wherein at least a part of the air passing through said conduit is diverted through said oxygen concentrator (20).

3. A pressurizing system as claimed in claim 1 or claim 2 further comprising variable control means (16, 26, 28) to enable the oxygen partial pressure in the cabin to be adjusted according to the altitude of the aircraft and the required total cabin pressure.

4. A pressurizing system as claimed in any preceding claim wherein said oxygen concentrator (20) is a polymer membrane concentrator.

5. A pressurizing system as claimed in any one of claims 1 to 3 wherein said oxygen concentrator (20) is a pressure swing absorption concentrator.

6. A pressurizing system as claimed in any preceding claim which is arranged to raise the oxygen content of the cabin atmosphere to a level in a range from 25 to 35% by volume.

7. A system for supplying oxygen to an aircraft cabin which comprises a conduit (12, 14, 15, 22) arranged to convey pressurized air from an engine (10) of the aircraft to the cabin, at least part of the air conveyed by said conduit being routed through an oxygen concentrator (20).
